# EUROPÄISCHE PATENTSCHRIFT

(11) **EP 3 156 304 B1**
(45) Veröffentlichungstag und Bekanntmachung des Hinweises auf die Patenterteilung: **13.04.2022**
(21) Anmeldenummer: 16193876.6
(22) Anmeldetag: 14.10.2016
(51) Int. Cl.: B62B 3/06

(54) **DEICHSELGEFÜHRTES FLURFÖRDERZEUG**
INDUSTRIAL TRUCK LED BY A DRAWBAR
CHARIOT DE MANUTENTION COMMANDÉ PAR TIMON

(30) Priorität: 16.10.2015 DE 102015117675
(43) Veröffentlichungstag der Anmeldung: 19.04.2017
(73) Patentinhaber: Jungheinrich Aktiengesellschaft, 22047 Hamburg (DE)
(72) Erfinder: Kral, Marko, 06114 Halle/Saale (DE); Mittag, Stefan, 04178 Leipzig (DE)
(74) Vertreter: Hauck Patentanwaltspartnerschaft mbB

(56) Entgegenhaltungen:
- EP-A1- 1 016 578
- EP-A1- 1 439 107
- EP-A1- 2 412 661
- EP-A2- 2 110 293
- DE-U1- 20 215 753

## Beschreibung

Die vorliegende Erfindung betrifft ein deichselgeführtes Flurförderzeug mit einem Antriebsteil und einem Lastteil, das ein höhenverstellbares Lasttragmittel aufweist. Das Antriebsteil besitzt einen batteriegespeisten elektrischen Antrieb. Zur Bedienung des Flurförderzeugs ist eine Deichsel vorgesehen, die einen mit mehreren Bedienelementen und einer Anzeigeeinheit ausgestatteten Deichselkopf besitzt.

Aus EP 1 016 578 A1 ist ein Deichselkopf für ein deichselgeführtes Flurförderzeug bekannt, der zwei seitliche Handgriffe mit endseitig angeordneten Wippschaltern zur Betätigung von Funktionen des Flurförderzeugs besitzt. Am freien Ende des Deichselkopfes ist ein Notaus-Taster angeordnet. In einem zentralen Bereich ist auf der zum Lastteil hinweisenden Seite des Deichselkopfes ein Display angeordnet. Das Display ist mit einer Platine verbunden. Das Display ist vorgesehen, um bei der Kontrolle von Fehlfunktionen und dem Einstellen von Parametern verwendet zu werden. Das Einstellen von Parametern kann ohne weitere Mittel direkt über das Display erfolgen. Auch ist es möglich, zusätzliche Mittel zur Eingabe für das Display vorzusehen.

Aus EP 2 110 293 A2 ist ein Flurförderzeug bekannt, dessen Deichselkopf mit Bedienelementen ausgestattet ist. Elektrisch verbunden mit den Bedienelementen im Leitungskopf ist ein Display, das den Batterieladezustand anzeigen kann.

Der Erfindung liegt die Aufgabe zugrunde, ein deichselgeführtes Flurförderzeug bereitzustellen, dessen Handhabung und Bedienung mit einfachen Mitteln verbessert ist.

Erfindungsgemäß wird die Aufgabe durch ein Flurförderzeug mit den Merkmalen aus Anspruch 1 gelöst. Vorteilhafte Ausgestaltungen bilden den Gegenstand der Unteransprüche.

Das erfindungsgemäße Flurförderzeug ist mit einem Antriebsteil und einem Lastteil ausgestattet, wobei das Lastteil ein höhenverstellbares Lasttragmittel besitzt. Das Fahrzeug ist ein batteriegespeistes Elektrofahrzeug, das über eine Deichsel geführt ist. Die Deichsel besitzt einen Deichselkopf, der mehrere Bedienelemente und eine Anzeigeeinheit aufweist. Erfindungsgemäß ist die Anzeigeeinheit ausgebildet, um während eines Betriebs einen aktuellen Wert für den Ladezustand der Batterie anzuzeigen. Eine zur Anzeige des aktuellen Ladezustands der Batterie ausgebildete Anzeigeeinheit steht mit der Fahrzeugsteuerung in elektrisch leitender Verbindung, um von dieser Signale zum aktuellen Ladezustand der Batterie zu empfangen und diese optisch am Deichselkopf darzustellen. Im Gegensatz zu einer bekannten Anzeigeeinheit am Deichselkopf handelt es sich erfindungsgemäß um eine Ladezustandsanzeige im Deichselkopf. Erfindungsgemäß ist die Anzeigeeinheit auch ausgebildet, um zusätzlich einen Ladevorgang der Batterie anzuzeigen. Das Anzeigen eines Ladevorgangs besitzt den Vorteil, dass ein Benutzer durch einen Blick auf den Deichselkopf auch aus der Entfernung bereits erkennt, ob ein Ladevorgang an dem Flurförderzeug erfolgt.

Das erfindungsgemäße Flurförderzeug kann in einer Ausgestaltung selbst mit einem Ladegerät ausgestattet sein, während in einer anderen Ausgestaltung das Antriebsteil einen Ladeanschluss für ein externes Ladegerät besitzt. Bei der Verwendung eines externen Ladegeräts werden Ladestrom und Ladeleistung durch das externe Ladegerät erzeugt und über den Ladeanschluss an die Batterie angelegt. In der Regel erfolgt eine Datenkommunikation zwischen externem Ladegerät und Batterie, wobei auch in einer Fahrzeugsteuerung die notwendigen Daten über den Ladezustand der Batterie vorliegen. Diese können dann bevorzugt von der Fahrzeugsteuerung an die Anzeigeeinheit im Deichselkopf weitergeleitet werden.

In einer weiter bevorzugten Ausgestaltung besitzt das Bedienelement zwei Handgriffe und einen zentralen Bereich. In dem zentralen Bereich ist die Anzeigeeinheit angeordnet, so dass diese für eine Bedienperson auch während des Betriebs des Flurförderzeugs gut sichtbar ist.

Erfindungsgemäß ist bei einer ungefähr vertikal stehenden Ruheposition für die Deichsel die Anzeigeeinheit auf der vom Lastteil fortweisenden Seite angeordnet und auch aus der Entfernung gut sichtbar.

Erfindungsgemäß ist die Anzeigeeinheit leitungsgebunden mit einer Fahrzeugsteuerung verbunden und empfängt von dort Daten zum aktuellen Ladezustand.

Je nach Ausgestaltung kann die Anzeigeeinheit mit elektrischer Spannung aus dem Antriebsteil versorgt werden, alternativ ist es auch möglich, die Anzeigeeinheit mit einer separaten Spannungsversorgung zu versehen. Die separate Spannungsversorgung kann beispielsweise in Form einer austauschbaren Batterie in dem Deichselkopf integriert sein.

In einer weiteren bevorzugten Ausgestaltung ist die Anzeigeeinheit mit einer Reihe von LEDs ausgestattet, die durch ihre Farbe und/oder Anzahl beim Leuchten den Ladezustand der Batterie anzeigt. Ebenfalls ist es möglich, dass die Anzeigeeinheit als ein Display, ein- oder mehrfarbig ausgestaltet ist. Bevorzugt kann das Display auch nach Wunsch oder Erfordernis mit seiner Anzeige gestaltet werden.

Ein bevorzugtes Ausführungsbeispiel wird nachfolgend anhand der Figuren erläutert. Es zeigt:
- Fig. 1: ein deichsel geführtes Flurförderzeug mit seiner Deichsel in Ruhestellung und
- Fig. 2: ein Bedienelement mit einer Anzeigeeinheit.

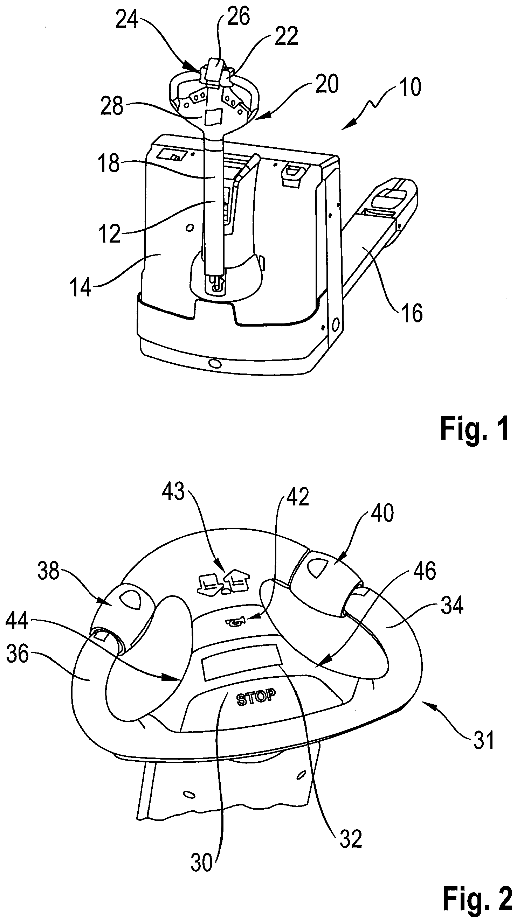

Fig. 1 zeigt ein deichselgeführtes Flurförderzeug 10 mit einer Deichsel 12. Das Flurförderzeug besitzt ein Antriebsteil 14 und ein Lastteil 16. Das Lastteil 16 ist hier als ein Niederhubmittel ausgestaltet. Die Erfindung kann auch bei Hochhubflurförderzeugen eingesetzt werden. Die Deichsel 12 besitzt einen Deichselarm 18 mit einem Deichselkopf 20. Der Deichselarm 18 ist um eine vertikale Achse drehbar gelagert und um eine horizontale Achse schwenkbar. In Fig. 1 ist die Ruheposition der Deichsel 12 dargestellt, in der der Deichselarm 18 im Wesentlichen senkrecht hochsteht. Der Deichselkopf 20 ist mit mehreren Bedienelementen 22, 24 ausgestattet, über die beispielsweise Fahrgeschwindigkeit und Hub des Lasttragmittels gesteuert werden. Zwischen den beiden Bedienelementen 22 und 24 ist ein Notstopp-Taster 26 vorgesehen, der ein Einklemmen einer Bedienperson verhindern soll. In der dargestellten Variante ist im mittleren Bereich des Bedienelements eine Anzeige 28 vorgesehen. Die Anzeige 28 ist als ein rechteckiger Bildschirm ausgebildet, der auf der Unterseite des Deichselkopfes angeordnet ist. Die Anordnung auf der Unterseite ist zwar während der Benutzung des Flurförderzeugs nicht sichtbar, dafür ist diese Anzeige, insbesondere in der dargestellten Ruheposition des Fahrzeugs, aus der Entfernung gut sichtbar.

Bei der Anzeige 28 ist vorgesehen, dass während des Betriebes der Ladezustand der Batterie und ein Ladevorgang angezeigt werden. Zusätzlich kann vorgesehen sein, dass die Anzeigeeinheit 28 auch im Ruhezustand und im ausgeschalteten Zustand des Fahrzeugs den Ladezustand der Batterie anzeigt. Auf diese Weise kann ein Fahrzeugführer bei der Auswahl des Fahrzeugs bereits vor dem Einschalten des Fahrzeugs den Ladezustand von dessen Batterie erkennen.

Fig. 2 zeigt eine alternative Ausgestaltung des Deichselkopfes, bei der die Anzeigeeinheit 32 auf der Oberseite des Deichselkopfes angeordnet ist. Die Oberseite des Deichselkopfes ist die in der senkrechten Position der Deichsel zum Lastteil hinweisende Seite des Deichselkopfes. Selbstverständlich ist es möglich, die Anzeigeeinheiten 28 aus Fig. 1 und 32 aus Fig. 2 gemeinsam an einem Deichselkopf vorzusehen, so dass dieser zu beiden Seiten eine Anzeigeeinheit besitzt. Der Einbau der Anzeigeeinheit erfolgt mit einer separaten Baugruppe, die eine elektrische Schnittstelle und eine Umhausung für eine mechanische Anbindung besitzt. Die Ansteuerung erfolgt durch eine Mehrdrahttechnik oder einen fahrzeuginternen Bus. Der jeweilige Zustand, ob Entlade- oder Ladevorgang und die verwendeten Komponenten, beispielsweise das verwendete Ladegerät, werden dabei berücksichtigt.

Der in Fig. 2 dargestellte Deichselkopf 31 besitzt zwei seitlich angeordnete Handgriffe 34 und 36, die jeweils Drehschalter 38, 40 an ihren Enden zur Betätigung des Antriebs besitzen. Zentral in dem mittleren Bereich angeordnet ist eine Hupe 42 sowie Anzeigen 43, die die Hubrichtung anzeigen. Ein Notstopp-Taster 30 ist an dem zum Körper weisenden Ende des Deichselkopfes angeordnet und erfüllt eine Körperschutz- oder Stoppfunktion, wenn er betätigt wird. Die Anzeigeeinheit 32 ist zwischen dem Notstopp-Taster 30 und der Hupe 42 gut sichtbar für den Fahrer angeordnet.

Die Bedieneinheit besteht aus einem mehrteiligen Gehäuse und besitzt in ihrem Inneren eine Bedienelektronik. Eine Fahrtrichtungsauswahl kann an dem Bedienelement über Sensoren 44, 46 erfolgen.

### Bezugszeichenliste

- 10: Flurförderzeug
- 12: Deichsel
- 14: Antrieb steil
- 16: Lastteil
- 18: Deichselarm
- 20: Deichselkopf
- 22: Bedienelement
- 24: Bedienelement
- 26: Notstopp-Taster
- 28: Anzeigeeinheit
- 30: Notstopp-Taster
- 31: Deichselkopf
- 32: Anzeigeeinheit
- 34: Handgriff
- 36: Handgriff
- 38: Drehschalter
- 40: Drehschalter
- 42: Hupe
- 43: Anzeige
- 44: Sensor
- 46: Sensor

## Patentansprüche

1. Flurförderzeug (10) mit einem Antriebsteil (14) und einem Lastteil (16), das ein höhenverstellbares Lasttragmittel aufweist, wobei das Antriebsteil (14) einen batteriegespeisten, elektrischen Antrieb und eine Deichsel aufweist, die einen mit mehreren Bedienelementen (22, 24) und einer Anzeigeeinheit (28) ausgestatteten Deichselkopf besitzt, wobei
die Anzeigeeinheit (28) ausgebildet ist, um während des Betriebes einen Ladezustand der Batterie anzuzeigen,
**dadurch gekennzeichnet, dass** die Deichsel eine Ruheposition aufweist, in der diese annähernd vertikal steht, wobei die Anzeigeeinheit (28) auf der vom Lastteil (16) fortweisenden Seite angeordnet ist.

2. Flurförderzeug nach Anspruch 1, **dadurch gekennzeichnet, dass** die Anzeigeeinheit (28) ausgebildet ist, um zusätzlich einen Ladevorgang der Batterie anzuzeigen.

3. Flurförderzeug nach Anspruch 1 oder 2, **dadurch gekennzeichnet, dass** die Anzeigeeinheit (28) auch im Ruhezustand und im ausgeschalteten Zustand des Fahrzeugs den Ladezustand der Batterie anzeigt.

4. Flurförderzeug nach einem der Ansprüche 1 bis 3, **dadurch gekennzeichnet, dass** das Antriebsteil (14) zusätzlich ein Ladegerät aufweist.

5. Flurförderzeug nach einem der Ansprüche 1 bis 3, **dadurch gekennzeichnet, dass** das Antriebsteil (14) einen Ladeanschluss für ein externes Ladegerät aufweist.

6. Flurförderzeug nach einem der Ansprüche 1 bis 5, **dadurch gekennzeichnet, dass** die Batterie während des Ladevorgangs elektrisch angeschlossen in dem Antriebsteil verbleibt.

7. Flurförderzeug nach einem der Ansprüche 1 bis 6, **dadurch gekennzeichnet, dass** der Deichselkopf zwei Handgriffe und einen zentralen Bereich aufweist, wobei die Anzeigeeinheit in dem zentralen Bereich angeordnet ist.

8. Flurförderzeug nach einem der Ansprüche 1 bis 7, **dadurch gekennzeichnet, dass** die Anzeigeeinheit leitungsgebunden mit einer Fahrzeugsteuerung verbunden ist und von dort die Daten zum Ladezustand der Batterie empfängt.

9. Flurförderzeug nach einem der Ansprüche 1 bis 8, **dadurch gekennzeichnet, dass** die Anzeigeeinheit mit elektrischer Spannung aus dem Antriebsteil versorgt wird.

10. Flurförderzeug nach einem der Ansprüche 1 bis 8, **dadurch gekennzeichnet, dass** die Anzeigeeinheit eine separate Spannungsversorgung besitzt.

11. Flurförderzeug nach einem der Ansprüche 1 bis 10, **dadurch gekennzeichnet, dass** die Anzeigeeinheit eine Reihe von Leuchtdioden aufweist, die durch ihre Farbe und/oder Anzahl im leuchtenden Zustand den Ladezustand der Batterie anzeigen.

12. Flurförderzeug nach einem der Ansprüche 1 bis 10, **dadurch gekennzeichnet, dass** die Anzeigeeinheit einen Bildschirm aufweist.

## Claims

1. An industrial truck (10) comprising a drive part (14) and a load part (16), which comprises a height-adjustable load-bearing means, wherein the drive part (14) comprises a battery-supplied, electrical drive and a tiller, which has a tiller head equipped with multiple operating elements (22, 24) and a display unit (28), wherein the display unit (28) is designed to display a charge level of the battery during operation,
**characterized in that** the tiller has a rest position, in which it is approximately vertical, wherein the display unit (28) is arranged on the side pointing away from the load part (16).

2. The industrial truck according to claim 1, **characterized in that** the display unit (28) is designed to additionally display a charging process of the battery.

3. The industrial truck according to claim 1 or 2, **characterized in that** the display unit (28) also displays the charge level of the battery in the rest state and in the switched-off state of the vehicle.

4. The industrial truck according to any one of claims 1 to 3, **characterized in that** the drive part (14) additionally comprises a charger.

5. The industrial truck according to any one of claims 1 to 3, **characterized in that** the drive part (14) comprises a charging connection for an external charger.

6. The industrial truck according to any one of claims 1 to 5, **characterized in that** the battery remains electrically connected in the drive part during the charging process.

7. The industrial truck according to any one of claims 1 to 6, **characterized in that** the tiller head comprises two handles and a central region, wherein the display unit is arranged in the central region.

8. The industrial truck according to any one of claims 1 to 7, **characterized in that** the display unit is connected by lines to a vehicle controller, from which it receives the data on the charge level of the battery.

9. The industrial truck according to any one of claims 1 to 8, **characterized in that** the display unit is supplied with electrical voltage from the drive part.

10. The industrial truck according to any one of claims 1 to 8, **characterized in that** the display unit has a separate voltage supply.

11. The industrial truck according to any one of claims 1 to 10, **characterized in that** the display unit comprises a series of light-emitting diodes, which indicate the charge level of the battery by means of their color and/or number in the luminous state.

12. The industrial truck according to any one of claims 1 to 10, **characterized in that** the display unit comprises a screen.

## Revendications

1. Chariot de manutention (10) comprenant une partie d'entraînement (14) et une partie de chargement (16) présentant un support de chargement réglable en hauteur, dans lequel la partie d'entraînement (14) présente un entraînement électrique alimenté par batterie et un timon possédant une tête de timon équipée de plusieurs éléments de commande (22, 24) et d'une unité d'affichage (28), dans lequel
- l'unité d'affichage (28) est conçue pour indiquer un état de charge de la batterie pendant le fonctionnement,
**caractérisé en ce que** le timon présente une position de repos, dans laquelle il est placé approximativement verticalement, l'unité d'affichage (28) étant disposée sur le côté opposé à la partie de chargement (16).

2. Chariot de manutention selon la revendication 1, **caractérisé en ce que** l'unité d'affichage (28) est conçue pour indiquer en outre une opération de charge de la batterie.

3. Chariot de manutention selon la revendication 1 ou 2, **caractérisé en ce que** l'unité d'affichage (28) indique l'état de charge de la batterie également à l'état de repos et à l'état éteint du véhicule.

4. Chariot de manutention selon l'une des revendications 1 à 3, **caractérisé en ce que** la partie d'entraînement (14) présente en outre un appareil de charge.

5. Chariot de manutention selon l'une des revendications 1 à 3, **caractérisé en ce que** la partie d'entraînement (14) présente une borne de charge pour un appareil de charge externe.

6. Chariot de manutention selon l'une des revendications 1 à 5, **caractérisé en ce que** la batterie reste raccordée électriquement à la partie d'entraînement pendant l'opération de charge.

7. Chariot de manutention selon l'une des revendications 1 à 6, **caractérisé en ce que** la tête de timon présente deux poignées et une zone centrale, dans lequel l'unité d'affichage est disposée dans la zone centrale.

8. Chariot de manutention selon l'une des revendications 1 à 7, **caractérisé en ce que** l'unité d'affichage est reliée par câble à une commande de véhicule et reçoit ainsi les données relatives à l'état de charge de la batterie.

9. Chariot de manutention selon l'une des revendications 1 à 8, **caractérisé en ce que** l'unité d'affichage est alimentée en tension électrique à partir de la partie d'entraînement.

10. Chariot de manutention selon l'une des revendications 1 à 8, **caractérisé en ce que** l'unité d'affichage possède une alimentation en tension séparée.

11. Chariot de manutention selon l'une des revendications 1 à 10, **caractérisé en ce que** l'unité d'affichage présente une série de diodes électroluminescentes, lesquelles indiquent l'état de charge de la batterie par leur couleur et/ou le nombre de diodes allumées.

12. Chariot de manutention selon l'une des revendications 1 à 10, **caractérisé en ce que** l'unité d'affichage présente un écran.
